Europäisches Patentamt

European Patent Office

Office européen des brevets

(11) Veröffentlichungsnummer: **0 037 434**
**B1**

(12) # EUROPÄISCHE PATENTSCHRIFT

(45) Veröffentlichungstag der Patentschrift:
03.10.84

(51) Int. Cl.³: **A 61 C 15/00**

(21) Anmeldenummer: **80107360.2**

(22) Anmeldetag: **26.11.80**

(54) **Zahnreinigungsgerät.**

(30) Priorität: **03.04.80 DE 3013093**

(43) Veröffentlichungstag der Anmeldung:
**14.10.81 Patentblatt 81/41**

(45) Bekanntmachung des Hinweises auf die Patenterteilung:
**03.10.84 Patentblatt 84/40**

(84) Benannte Vertragsstaaten:
**AT BE CH DE FR GB IT LI NL SE**

(56) Entgegenhaltungen:
**DE - A - 2 214 244**
**DE - A - 2 842 404**
**GB - A - 525 528**
**US - A - 2 180 522**
**US - A - 2 650 598**
**US - A - 3 631 869**

(73) Patentinhaber: **Dolinsky, Josef, Dr., Salzstrasse 4,
D-8960 Kempten (DE)**

(72) Erfinder: **Dolinsky, Josef, Dr., Salzstrasse 4,
D-8960 Kempten (DE)**

(74) Vertreter: **Hübner, Hans-Jürgen, Dipl.-Ing.,
Mozartstrasse 21, D-8960 Kempten (DE)**

**Beschreibung**

Die Erfindung betrifft ein Zahnreinigungsgerät bestehend aus einem etwa U-förmigen Halter mit zwei federnden Schenkeln, die je einen Einhängeschlitz für ein Zahnseidestück aufweisen, das an oder nahe seiner Enden je mit einer Verdickung versehen und dessen Abstand zwischen den Verdickungen so bemessen ist, dass bei an den Schenkeln anliegenden Verdickungen das die Schlitze durchsetzende Zahnseidestück gestrafft ist.

Die US-A-3 631 869 zeigt ein derartiges Zahnreinigungsgerät. Die Schlitze gehen von den Schenkelstirnflächen aus und verlaufen in der die beiden Schenkel enthaltenden Schenkelmittelebene. Das Zahnseidestück hat eine zwischen den beiden Verdickungen gemessene Länge, die etwas geringer ist als der Aussenabstand der beiden unverformten Schenkel. Werden die Schenkel etwas zusammengebogen, kann das Zahnseidestück eingehängt und durch Loslassen der Schenkel gestrafft werden. Die Schenkel weisen im Abstand von den Stirnflächen etwa quer zur Schenkellängsrichtung verlaufende weitere Schlitze in Form von Klemmkerben auf, die allerdings nur in Verbindung mit längeren, keine Verdickungen aufweisenden Zahnseidesträngen benutzbar sind.

Nachteilig ist bei dem bekannten Zahnreinigungsgerät, dass das Zahnseidestück bei Benutzung leicht aus den Schenkeln herausgleiten kann, wenn es beispielsweise in einer Zahnlücke hängenbleibt und ein Zug in Schenkellängsrichtung ausgeübt wird.

Aufgabe der Erfindung ist es, das bekannte Zahnreinigungsgerät dahingehend zu verbessern, dass das Zahnseidestück sicherer gehalten werden kann.

Diese Aufgabe wird bei einem Zahnreinigungsgerät der eingangs genannten Art erfindungsgemäss dadurch gelöst, dass die Schlitze im Abstand von den Schenkelstirnflächen angeordnet sind, jeweils von einer parallel zu der beide Schenkel mittig durchsetzenden Schenkelmittelebene liegenden Schenkelfläche ausgehen und sich bis etwa zu dieser Schenkelmittelebene erstrecken, dass die zwischen den Verdickungen gemessene Länge des Zahnseidestückes um etwa den 4fachen Betrag der durch die Schlitzlänge verminderten Breite des Schenkels grösser ist als der lichte Abstand der durch das Zahnseidestück im Spannungszustand gehaltenen Schenkel und dass das Zahnseidestück an jedem Schenkel unter Vollumschlingung des durch die Schlitzlänge verschmälerten Schenkelbereiches zweimal durch denselben Schlitz hindurchgeführt ist.

Dank der Vollumschlingung des um die Schlitzlänge verkleinerten Schenkelquerschnittes kann das Zahnseidestück in beliebigen Richtungen beansprucht werden, ohne dass es aus den Schenkeln herausgleiten kann.

Die abhängigen Ansprüche 2 bis 4 haben vorteilhafte Weiterbildungen der Erfindung zum Inhalt.

Anhand der Zeichnung, die zwei Ausführungsbeispiele darstellt, sei die Erfindung näher beschrieben.

Es zeigen:

Fig. 1 eine perspektivische Ansicht einer Ausführungsform des Zahnreinigungsgerätes,

Fig. 2 eine Schnittansicht längs der Linie 2–2 in Fig. 1 und

Fig. 3 eine perspektivische Ansicht einer abgewandelten Ausführungsform.

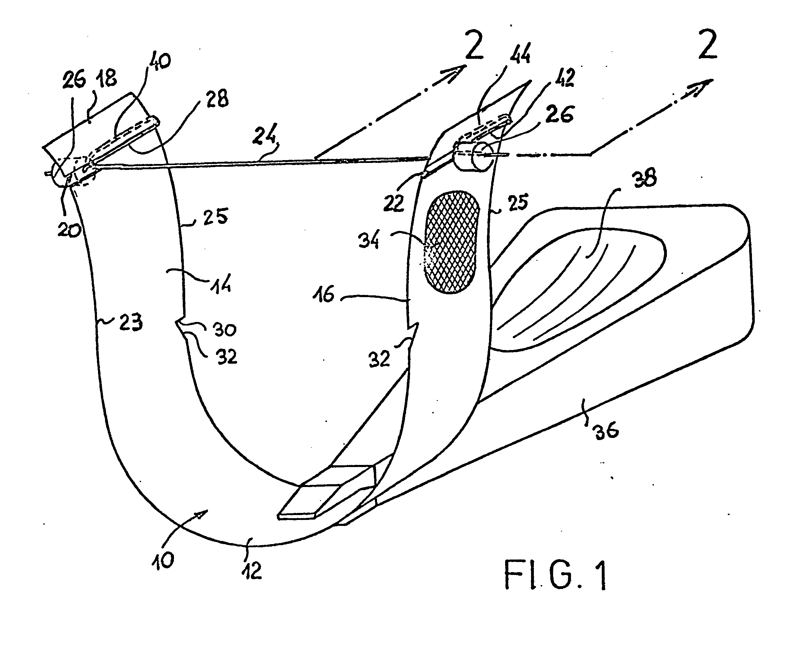

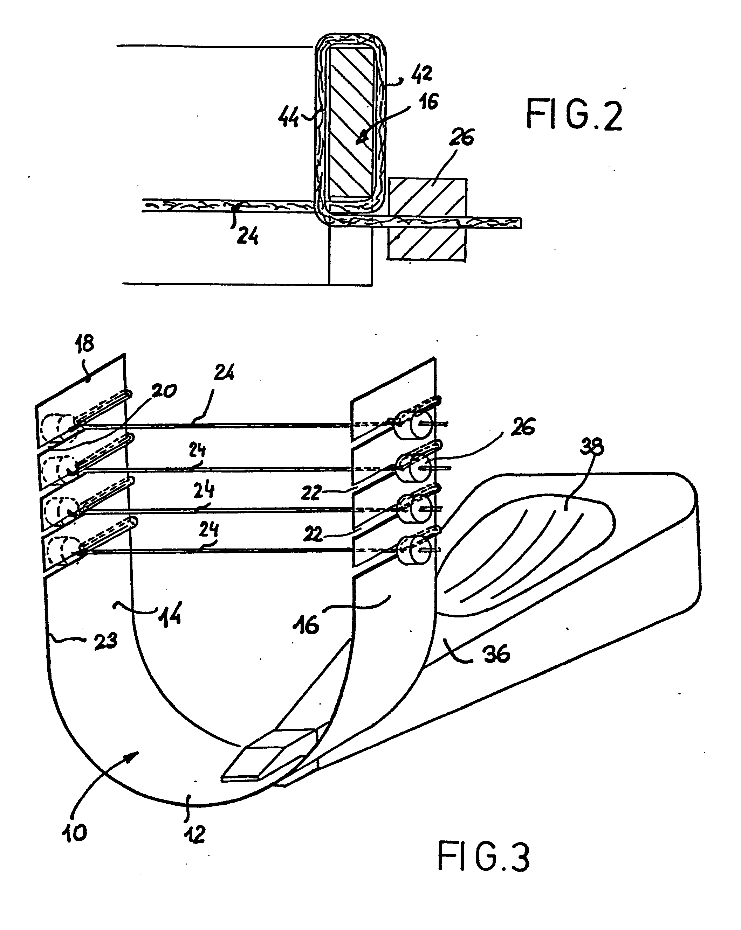

Ein U-förmiger Halter 10 besteht aus federndem flachem Material. Sein Joch 12 ist an einem Handgriff 36 mit Griffmulde 38 befestigt. Die beiden Schenkel 14, 16 des Halters 10 haben im Abstand von den Schenkelenden 18 jeweils einen Schlitz 20 bzw. 22, der von der parallel zu der beide Schenkel 14, 16 mittig durchsetzenden Schenkelmittelebene liegenden Schenkelfläche 23 ausgeht und etwa rechtwinklig zu der Schenkelmittelebene bis etwa an diese heran verläuft. Ein Zahnseidestück 24 hat zwei Verdickungen 26, 26, deren Abstand um etwa den 4fachen Betrag der durch die Schlitzlänge verminderten Breite jedes Schenkels grösser ist als der lichte Abstand der durch das Zahnseidestück im Spannungszustand gehaltenen Schenkel 14, 16, wobei die Materialdicke der Schenkel ausser acht gelassen worden ist. Zur Montage eines Fadenseidenstückes 24 wird dieses in den Schlitz 20 eingehängt, so dass die Verdickung 26 (links in Fig. 1) aussenseitig am Schenkel 14 anstösst. Dann wird das Zahnseidestück einmal um den an den Schlitz 20 angrenzenden Schenkelbereich voll herumgelegt, wobei die Abschnitte 28, 40 gebildet werden, sodann wird das Zahnseidestück 24 erneut durch den Schlitz 20 hindurch und dann zum anderen Schenkel geführt, wo es den Schlitz 22 ein erstes Mal durchsetzt, dann die beiden Abschnitte 42, 44 bildet und ein zweites Mal denselben Schlitz 22 durchsetzt (s. auch Fig. 2). Damit ist das Zahnseidestück sicher am Halter 10 verankert.

Der Schenkel 14 hat an seiner hinteren Schenkelfläche 25 eine Schneidkerbe 30, 32. Eine ähnliche Schneidkerbe 32 ist an der vorderen Schenkelfläche 23 des Schenkels 16 vorgesehen, um von einem Endlosstrang die einzelnen Zahnseidestücke 24 vor Gebrauch abzutrennen.

Fig. 3 zeigt einen Halter 10, der sich von demjenigen gemäss Fig. 1 dadurch unterscheidet, dass jeder Schenkel 14, 16 mehrere parallele und in gleichen Abständen angeordnete Schlitze 20 bzw. 22 aufweist, in die paarweise jeweils ein Zahnseidestück 24 eingehängt wird. Alle Schlitze sind gleich lang und enden etwa in der gemeinsamen Schenkelmittelebene, so dass auch alle Zahnseidenstücke 24 in dieser Ebene verlaufen und einen Vorhang bilden.

Die Schlitze 20, 22 brauchen in beiden Ausführungsformen nicht notwendigerweise von der vorderen Schenkelfläche 23 auszugehen, sondern die Schlitze 20 können von der vorderen Schenkelfläche 23 des Schenkels 14 und die Schlitze 22 können von der diagonal gegenüberliegenden hinteren Schenkelfläche 25 des Schenkels 16 ausgehen, was eine zusätzliche Sicherheit gegen das Herausgleiten des Zahnseidestückes aus der Halterung bringt, insbesondere wenn sich das Zahnseidestück schon etwas gedehnt hat.

## Patentansprüche

1. Zahnreinigungsgerät bestehend aus einem etwa U-förmigen Halter (10) mit zwei federnden Schenkeln (14, 16), die je einen Einhängeschlitz (20, 22) für ein Zahnseidestück (24) aufweisen, das an oder nahe seiner Enden je mit einer Verdickung (26) versehen und dessen Abstand zwischen den Verdickungen (26, 26) so bemessen ist, dass bei an den Schenkeln (14, 16) anliegenden Verdickungen (26, 26) das die Schlitze (20, 22) durchsetzende Zahnseidestück (24) gestrafft ist, dadurch gekennzeichnet, dass die Schlitze (20, 22) im Abstand von den Schenkelstirnflächen angeordnet sind, jeweils von einer parallel zu der beide Schenkel (14, 16) mittig durchsetzenden Schenkelmittelebene liegenden Schenkelfläche (23, 25) ausgehen und sich bis etwa zu dieser Schenkelmittelebene erstrecken, dass die zwischen den Verdickungen (26, 26) gemessene Länge des Zahnseidestückes (24) um etwa den 4fachen Betrag der durch die Schlitzlänge verminderten Breite des Schenkels (14, 16) grösser ist als der lichte Abstand der durch das Zahnseidestück (24) im Spannungszustand gehaltenen Schenkel (14, 16) und dass das Zahnseidestück (24) an jedem Schenkel (14, 16) unter Vollumschlingung des durch die Schlitzlänge verschmälerten Schenkelbereiches zweimal durch denselben Schlitz (20, 22) hindurchgeführt ist.

2. Zahnreinigungsgerät nach Anspruch 1, dadurch gekennzeichnet, dass zur Bildung eines aus mehreren parallelen Zahnseidestücken (24, 24) gleicher Länge bestehenden Zahnseidevorhanges jeder Schenkel (14, 16) mehrere gleichartige Schlitze (20, 20; 22, 22) aufweist.

3. Zahnreinigungsgerät nach Anspruch 1 oder 2, dadurch gekennzeichnet, dass die Schlitze (20, 22) im wesentlichen rechtwinklig zur Schenkellängsmittelebene verlaufen.

4. Zahnreinigungsgerät nach einem der Ansprüche 1 bis 3, dadurch gekennzeichnet, dass der oder die Schlitze (20) des einen Schenkels (14) und derjenige (22) oder diejenigen des anderen Schenkels (16) an einander diagonal gegenüberliegenden Schenkelflächen (23, 25) münden.

## Claims

1. A tooth cleaning implement consisting of a substantially U-shaped frame (10) having a pair of substantially parallel resilient arms (14, 16), each one of said arms provided with an insert slit (20, 22) for a dental floss piece (24) provided with enlargings (24) at or near at the ends of which, the distance between said enlargings (26, 26) being designed such that the dental floss piece (24) passing through said slits (20, 22) is tight when the enlargings (26, 26) contact the arms (14, 16), characterized in that the slits (20, 22) are spaced from the front faces of the arms, begin at an arm face (23, 25) lying parallel with an arm center plane passing both arms (14, 16) in the center thereof respectively and extend substantially to this arm center plane, that the length of the dental floss piece (24) as measured between the enlargings (26, 26) is greater by substantially four times the amount of the width of the arms (14, 16) reduced by the length of the slit respectively than the inner distance of the arms (14, 16) held in tensioned condition by the dental floss piece (24) and that the dental floss piece (24) is passed two times through the same slit (20, 22) completely wound round the arm area reduced by the length of the slit.

2. A tooth cleaning implement according to claim 1, characterized in that each arm (14, 16) comprises a plurality of slits (20, 20; 22, 22) of the same kind for forming a dental floss curtain consisting of a plurality of parallel dental floss pieces (24, 24) of equal length.

3. A tooth cleaning implement according to claim 1 or 2, characterized in that the slits (20, 22) run substantially at right angles to the longitudinal center plane of the arms.

4. A tooth cleaning implement according to one of the claims 1 to 3, characterized in that the slit or slits (20) of the one arm (14) and that (22) of the other arm (16) open at arm faces (23, 25) which lie diagonally opposite to one another.

## Revendications

1. Dispositif pour nettoyer les dents constitué d'un support (10) de forme approximativement en U, muni de deux branches (14, 16) faisant ressort, qui présentent respectivement une fente d'accrochage (20, 22) pour un fil dentaire (24) qui est muni sur ses extrémités ou à proximité de celles-ci d'un épaississement (26) et la distance entre ces épaississements respectifs (26, 26) étant dimensionnée de telle manière que le fil dentaire (24) passant à travers les fentes (20, 22) se trouve tendu lorsque les épaississements (26, 26) adhèrent aux branches (14, 16), caractérisé par le fait que les fentes (20, 22) sont disposées à une certaine distance des surfaces frontales des branches, qu'elles partent respectivement d'une surface (23, 25) située parallèlement au plan médian passant au centre des deux branches (14, 16) et s'étendent jusqu'à environ ce plan médian, par le fait que la longueur du fil dentaire (24) mesurée entre les épaississements (26, 26) est plus grande que la distance entre les deux branches (14, 16) lorsque le fil dentaire (24) est à l'état tendu, cette différence de longueur étant approximativement égale au quadruple de la largeur de la branche (14,16) diminuée de la longueur de la fente et par le fait que le fil dentaire (24) passe deux fois à travers la même fente (20, 22) de chaque branche (14, 16) en formant une boucle complète autour de la partie de branche rendue plus étroite par la longueur de la fente.

2. Dispositif pour nettoyer les dents selon la revendication 1, caractérisé par le fait que pour former un rideau de fils dentaires constitué de plusieurs fils dentaires parallèles de même longueur (24, 24), chaque branche (14, 16) présente plusieurs fentes similaires (20, 20; 22, 22).

3. Dispositif pour nettoyer les dents selon les revendications 1 ou 2, caractérisé par le fait que les fentes (20, 22) s'étendent sensiblement perpendiculairement par rapport au plan médian longitudinal des branches.

4. Dispositif pour nettoyer les dents selon l'une quelconque des revendications 1 à 3, caractérisé par le fait que la fente ou les fentes (20) de l'une des branches (14) et la fente ou les fentes (22) de l'autre branche (16) aboutissent sur des surfaces de branche (23, 25) se faisant vis-à-vis en diagonale 1 une par rapport à l'autre.

FIG. 1

FIG.2

FIG.3